# EUROPÄISCHE PATENTSCHRIFT

(11) **EP 4 008 691 B1**
(45) Veröffentlichungstag und Bekanntmachung des Hinweises auf die Patenterteilung: **24.04.2024**
(21) Anmeldenummer: 20211257.9
(22) Anmeldetag: 02.12.2020
(51) Int. Cl.: C02F 9/00, C14C 3/06, C14C 3/32, C02F 1/28, C02F 1/52, C02F 1/66, C02F 101/22, C02F 103/24

(54) **ENTFERNUNG VON GELÖSTEN CR(III)-VERBINDUNGEN AUS VERBRAUCHTEN GERBFLOTTEN**
REMOVAL OF DISSOLVED CR(III) COMPOUNDS FROM SPENT TANNING LIQUORS
ENLÈVEMENT DES COMPOSÉS CR(III) DISSOUTS DES BAINS DE TANNAGE UTILISÉS

(43) Veröffentlichungstag der Anmeldung: 08.06.2022
(73) Patentinhaber: TFL Ledertechnik GmbH, 79618 Rheinfelden (DE)
(72) Erfinder: Rabe, Volker, 51375 Levekusen (DE); Boll, Matthias, 51061 Köln (DE)
(74) Vertreter: Maucher Jenkins Patent- und Rechtsanwälte

(56) Entgegenhaltungen:
- EP-A1- 3 795 542
- CN-A- 107 162 268
- US-A- 4 560 546
- FAHIM N F ET AL: "Removal of chromium(III) from tannery wastewater using activated carbon from sugar industrial waste", JOURNAL OF HAZARDOUS MATERIALS, ELSEVIER, AMSTERDAM, NL, Bd. 136, Nr. 2, 21. August 2006 (2006-08-21), Seiten 303-309, XP027884625, ISSN: 0304-3894 [gefunden am 2006-08-21]
- LEYVA-RAMOS R ET AL: "ADSORPTION OF TRIVALENT CHROMIUM FROM AQUEOUS SOLUTIONS ONTO CTIVATED CARBON", JOURNAL OF CHEMICAL TECHNOLOGY AND BIOTECHNOLOGY, WILEY, Bd. 62, Nr. 1, 1. Januar 1995 (1995-01-01) , Seiten 64-67, XP000486478, ISSN: 0268-2575

## Beschreibung

Die Erfindung betrifft das technische Gebiet der Aufarbeitung von Abfällen, die bei der Gerbung und den nachgelagerten Prozessschritten von Leder anfallen und ist in den Ansprüchen und nachstehend definiert.

### Stand der Technik

Für die Entfernung von Chromverbindungen aus Abwässern lag in der Vergangenheit das Hauptaugenmerk auf der Cr(VI)-Entfernung, da hier die größere Toxizität und deutlich niedrigere gesetzliche Abwassergrenzwerte im Vergleich zu Cr(III) vorliegen. Dennoch unterliegt auch die Menge an Cr(III)-Verbindungen im Abwasser oftmals gesetzlichen Regelungen und muss bei erhöhten Werten in wässrigen Abfällen vor der Einleitung in ein öffentliches System reduziert oder komplett entfernt werden. Besonders in Abwässern von Gerbereien können signifikante Mengen an gelösten Cr(III)-verbindungen aus der Gerbung mit Chrom und den nachgelagerten Prozessschritten enthalten sein.

Mit verbrauchten Gerbflotten sind im Sinne der vorliegenden Erfindung chromhaltige, wässrige Prozessrückstände (auch Restbrühen genannt) gemeint, welche während der Lederherstellung anfallen. Bevorzugt sind damit die chromhaltigen, wässrigen Prozessrückstände gemeint, die nach einem oder mehreren Prozessschritten bei der Chromgerbung oder den darauf der nachgelagerten Prozessschritten wie zum Beispiel dem Abwelken, Spülen, Nachgerben, Färben und Fetten anfallen und üblicherweise über das Abwasser der Gerberei abgelassen werden.

Ein übliches Verfahren, Cr(III)-Salze aus wässrigen Lösungen zu entfernen, ist das Anheben des pH Wertes auf etwa 8,5. Dadurch fallen schwerlösliche Cr(III)-Verbindungen aus, die von der flüssigen Phase getrennt werden können. Hierbei hat die verwendete Base einen großen Einfluss auf die Struktur der abgeschiedenen Chromverbindung, die Sedimentationsgeschwindigkeit und die Filtrierbarkeit. (Bibliothek des Leders, Band 3, Seite 168). Normalerweise wird eine höhere Konzentration des Chromrückstandes vor der Filtration bevorzugt, um das abzufiltrierende Volumen so gering wie möglich zu halten oder, wenn möglich, ganz zu vermeiden. Beispielsweise kann dies durch eine vorgeschaltete Sedimentation der festen Bestandteile erfolgen Anschließend kann ein Großteil der überstehende Lösung durch einfaches Dekantieren entfernt werden. Wie gut dieses Verfahren gelingt, ist, wie weiter oben erwähnt, abhängig von der verwendeten Base. Bei Verwendung von Natriumcarbonat oder Natriumhydrogencarbonat zum Anheben des pH-Wertes ist beispielsweise das Volumen der sedimentierten Chromverbindungen auch nach mehrstündigem Sedimentieren noch groß, wodurch das Filtrationsvolumen groß ist und eine Filtration entsprechend zeitintensiv ist.

Ein weiterer Nachteil des Verfahrens ist der feinteilige Niederschlag. Die Filtration sehr feinteiliger Niederschläge ist zwar technisch möglich, beispielsweise durch Membran- oder Querstromfiltration, aber durch die Blockade der Poren sind häufige Rückspülungen notwendig (R. Sondhia, Y.S. Lina; F. Alvarez, Journal of Membrane Science 174 (2000) 111-122).

Verbessert wird die Filtrierbarkeit des Niederschlages durch Zugabe von beispielweise Magnesiumoxid oder -carbonat anstelle der Natriumverbindungen. Bei Verwendung dieser Verbindungen zum Anheben des pH-Wertes erhält man Chromverbindungen, die sich besser als bei der Verwendung von Natronlauge absetzen und kompakte Schlämme bilden. Nachteil ist die äußerst geringe Wasserlöslichkeit dieser beiden Magnesiumverbindungen. Aufgrund der geringen Löslichkeit stellt sich der pH-Wert oftmals erst nach Stunden ein und verlängert sich um weitere Stunden, sobald der pH-Wert den angestrebten Wert unterschreitet. Dies macht den ganzen Prozess bei Verwendung von Magnesiumverbindungen sehr zeitaufwendig und damit teuer.

Eine Möglichkeit, die Sedimentation und/oder die Filtrierbarkeit der entstehenden unlöslichen Chromverbindungen zu verbessern, ist es, bei der pH-Anhebung Flockungsmitteln einzusetzen. Typische Beispiele für Flockungsmittel sind Kondensationsprodukte aus Dimethylamin und Epichlorhydrin, Copolymere aus Acrylamid und quaternären Estern oder Acrylsäure. Dabei wird der Einsatz von Copolymeren des Acrylamids seit längerem kontrovers diskutiert. Diese sind, je nach Zusammensetzung, in unterschiedliche Wassergefährdungsklassen eingestuft. [Umweltbundesamt (1997) Text 39/97], was dem Einsatz dieser Verbindungen zur Reinigung von Abwasser entgegensteht. Des Weiteren können die Flockungsmittel je nach Zusammensetzung bei der Wiederverwendung der Chromverbindungen durch beispielsweise Wiederauflösen der schwerlösliche Cr-Verbindungen bei niedrigem pH-Wert und anschließendem Wiedereinsatz in der Ledergerbung einen negativen Einfluss auf den Gerbprozess und/oder die Lederqualität haben. Dadurch ist die Wiederverwertung der abgetrennten schwerlösliche Cr-Verbindungen eingeschränkt und muss für jede Verbindung vor deren Verwendung individuell geprüft werden. Aus diesem Grund und aufgrund der höheren Kosten möchte man auf den Einsatz von Flockungsmittel verzichten.

In DE4416130A1 erwähnen die Autoren die Verwendung von Aktivkohle in einem Prozess zur Chromabtrennung aus Gerbflotten. Allerdings wird in dem von den Erfindern vorgeschlagenen Verfahren die Aktivkohle erst nach der eigentlichen Fällung eingesetzt. Diese Vorgehen entspricht nicht dem in dieser Anmeldung beschriebenen Ablauf, der die Fällung des Chroms in Gegenwart der Aktivkohle durch pH-Wert Erhöhung zwingend voraussetzt.

Eine weitere Möglichkeit zur Abtrennung des Chroms aus wässrigen Lösungen ist, die Cr(III) erhaltene Lösung durch einen selektiven Kationenaustauscher zu reinigen, wie zum Beispiel in F. Gode, E. Pehlivan Journal of Hazardous Materials B100 (2003) 231-243 oder in S. Kocaoba and G. Akcin Adsorption Science & Technology Vol. 22 No. 5 2004 oder in S. Rengaraj, Kyeong-Ho Yeon, Seung-Hyeon Moon, Journal of Hazardous Materials B87 (2001) 273-287, beschrieben. Das inhärente Problem an diesem Verfahren ist, dass die Anzahl der Adsorptionsplätze auf dem lonentauscher verhältnismäßig gering ist. Dadurch (und aus anderen Gründen) wird nur eine stark verdünnte Lösung nach der Regenerierung des Ionenaustauschers (zu erwarten sind Lösungen im niedrigen einstelligen Prozentbereich bezogen auf Chrom) erhalten, wodurch sich das Verhältnis des gereinigten Volumens zum zu entsorgenden Volumen verschlechtert. Es müssten entsprechend großvolumige Kolonnen mit Ionenaustauschern vorgehalten werden, ebenso wären Tanks mit Lösungen zur Regeneration (Säure und Lauge) der Säulen nötig. Die so erzielte Volumenreduktion wäre, bei den in Gerbereien typischerweise in verbrauchten Gerbflotten vorliegenden Chromkonzentrationen, unzureichend.

Die Adsorption von Cr(III) aus Lösungen an Adsorbentien wie Aktivkohle wurde ebenfalls wissenschaftlich untersucht (Journal of Hazardous Materials, 27 Jan 2006, 136(2), 303-309). Zwar kann das eingesetzte Cr(III) in der Aktivkohle bis zu einem Gehalt von etwa 2,5 Gew-% aufgenommen werden, allerdings ist die verbleibende Lösung nicht ausreichend chromfrei, und die Konzentration der Ausgangslösung war in den angegebenen Beispielen nur gering. Daher wird durch ein solches Verfahren die gestellte Aufgabe nicht erfüllt.

Es bestand daher Bedarf an einem neuen Verfahren, mit dem gelöste Cr(III)-Verbindungen vollständig und nahezu unabhängig von der Cr(III)-Konzentration aus den verbrauchten Gerbflotten abgeschieden werden können. Bevorzugt sollte dieses Verfahren zudem zu einem Rückstand mit hoher Chromkonzentration und dadurch ermöglichter Wiederverwertbarkeit führen, sowie zu einem Abwasser, welches weitgehend frei von Chrom und anderen störenden Komponenten ist und somit dem öffentlichen Abwassersystem zugeführt werden kann. Vorzugsweise sollte sich das Verfahren mittels umweltverträglichen und kostengünstigen Chemikalien und mit geringem technischen Aufwand durchführen lassen. Im Idealfall sollte das Verfahren dazu geeignet sein, auch Gerbflotten mit einem sehr hohen Gehalt an gelösten Cr(III)-verbindungen (mehrere Gramm pro Liter) sicher von Cr(III) zu befreien.

EP 3 795 542 A1 ist ein lediglich hinsichtlich Neuheit anwendbares Älteres Recht, bei dem jedoch eine Reduktion von Cr(VI) zu Cr(III) unter Zugabe eines von Aktivkohle verschiedenen Reduktionsmittels erforderlich ist.

N.F. Fahim et al., J. of Hazardous Materials B136 (2006), 303-309, untersucht Adsorptionsisothermen für die Bindung von Chrom(III) aus Gerbereiabwässern.

US4560546A und CN107162268A offenbaren andere Verfahren zum Entfernen von gelösten Cr(III)-Verbindungen aus gebrauchten Gerbflotten.

Überraschenderweise wurde nun gefunden, dass dieser Bedarf durch ein Verfahren gemäß den vorliegenden Patentansprüchen erfüllt werden kann.

Es handelt sich dabei um ein Verfahren zum Entfernen von gelösten Cr(III)-verbindungen aus gebrauchten Gerbflotten ohne Zugabe eines von Aktivkohle verschiedenen Reduktionsmittels, umfassend die Schritte:
a) Zugabe von Aktivkohle zu mindestens einer Cr(III)-haltigen gebrauchten Gerbflotte,
b) Erhöhung des pH der Mischung aus Schritt a) unter Durchmischung auf einen Wert von 7,0 bis 9,0 zur Ausfällung von Cr(III) unter Bildung eines Cr(III)-Niederschlag-Aktivkohle-Gemenges
c) Abtrennung des Cr(III)-Niederschlag-Aktivkohle-Gemenges.

Bevorzugt wird bei der Durchführung des Schritts a) die verbrauchte Gerbflotte, in einen Behälter gefüllt und idealerweise unter Rühren Aktivkohle zugegeben. Die gebrauchte Gerbflotte weist üblicherweise einen pH im Bereich von 2 bis 5, vorzugsweise von 2 bis 4 auf.

Anschließend wird in Schritt b) der pH-Wert angehoben auf einen Wert von 7,0 bis 9,0 und besonders bevorzugt von 8,0 bis 9,0. Vorzugsweise erfolgt dies durch Zugabe einer Lauge, d.h. einer basisch reagierenden, wässrigen Lösung, besonders bevorzugt einer wässrigen Lösung aus Natriumhydroxid (Natronlauge). Alternativ können auch andere geeignete flüssige oder feste Basen, z.B. Natriumhydroxid verwendet werden.

Bevorzugt erfolgen die Schritte a) und/oder b) in einem Reaktionsbehälter unter Umwälzung, Rühren, Pumpen und/oder Einblasen von Gasen.

Bei der basischen Fällung des Cr(III) in Gegenwart von Aktivkohle gemäß Schritt b) bildet sich ein unlösliches Cr(III)-Niederschlag-Aktivkohle-Gemenge. Dieses bietet gegenüber dem, bei der basischen Fällung gemäß dem Stand der Technik erhaltenen Cr(OH)₃-Niederschlag den entscheidenden Vorteil einer besonders guten Abtrennbarkeit, welche mutmaßlich auf der großen Partikelgröße des Cr(III)-Niederschlag-Aktivkohle-Gemenges beruht.

Die Abtrennung in Schritt c) kann durch Abfiltrieren, Zentrifugieren oder Sedimentieren, bevorzugt durch Abfiltrieren in einer Nutsche oder einer Filterpresse, Sedimentieren mittels Gravitation oder Filtrieren an Filterkerzen erfolgen.

Die in Schritt b) erhaltenen Suspension aus (festem) Cr(III)-Niederschlag-Aktivkohle-Gemenge und flüssiger (wässriger) Phase wird vorzugsweise auf eine Filterpresse oder in einen anderen, zur Separation von Fest-Flüssiggemischen geeigneten Apparat gepumpt. Die Filtration/Fest-Flüssig-Trennung ist einfach, schnell und erfordert keine besonderen Vorkehrungen.

Alternativ kann auch auf eine Fitration verzichtet werden, da die Mischung aus Aktivkohle und unlösliche Chromverbindung innerhalb kürzester Zeit sedimentiert. Daraufhin kann die flüssige Phase beispielsweise durch Dekantieren oder Abpumpen abgetrennt werden.

Die in Schritt c) erhaltene wässrige Phase weist einen Gesamtchromgehalt von weniger als 5ppm vorzugsweise nicht mehr als 4 ppm gelöstes Chrom auf und kann damit in eine übliche kommunale Kläranlage eingeleitet werden.

Die Aktivkohle konzentriert das Chrom auf, was sowohl das Abfallaufkommen wie auch die Entsorgungskosten verringert. Des Weiteren kann das Chrom-Aktivkohlegemisch als Rohstoff in der Ferrochchrom-Industrie Verwendung finden.

In einem optionalen weiteren Schritt d) wird der Cr(III)-Niederschlag des in Schritt c) abgetrennten Cr(III)-Niederschlag-Aktivkohle-Gemenges durch Senkung des pH-Wertes teilweise oder vollständig in Lösung gebracht. Der pH-Wert kann dabei durch Zugabe einer Säure, vorzugsweise einer mineralischen Säure, besonders bevorzugt Schwefelsäure und/oder Salzsäure, ganz besonders bevorzugt Schwefelsäure und/oder Zugabe von sauren Cr(III)-Verbindungen abgesenkt werden. Geeignete saure Cr(III)-Verbindungen weisen als Mischung (10 Gew.-%) in Wasser einen pH von kleiner 6, vorzugsweise kleiner 3 und besonders bevorzugt kleiner 2 auf. Bevorzugt sind Chromverbindungen aus der Gruppe Cr(III)oxide, Cr(III)hydroxid, Cr(III)halogenide und Cr(III)sulfat und besonders bevorzugt basisches Cr(III)sulfat. Der Name des Letzteren leitet sich im Übrigen von der Basizität von Chromgerbstoffen und nicht vom pH seiner wässrigen Lösung ab, welcher nämlich < 7 ist.

Zum Auflösen des Cr(III)-Niederschlags wird die Säure und/oder die saure Cr(III)-Verbindung mit Wasser zu einer sauren Lösung vermengt und diese mit dem abgetrennten Cr(III)-Niederschlag-Aktivkohle-Gemenge in Kontakt gebracht.

Hierbei kann das Auflösen des Cr(III)-Niederschlags dadurch erfolgen, dass einerseits die saure Lösung durch die mit dem Cr(III)-Niederschlag-Aktivkohle-Gemenge beladene Filterpresse gepumpt wird oder das Cr(III)-Niederschlag-Aktivkohle-Gemenge in ein Lösegefäß überführt wird, mit der die saure Lösung gerührt wird und abschließend wieder filtriert wird. Die dabei erhaltene Cr(III)-haltige Lösung kann für Gerbzwecke verwendet werden und somit zur Zubereitung einer neuen Gerbflotte eingesetzt werden. Der ausgelaugte Aktivkohlerückstand kann für eine weitere Verwendung in Schritt a) des vorliegenden Verfahrens zurückgeführt werden.

### Beispiele

### Analytik

### Bestimmung von gelöstem Chrom

Die Proben werden in einem kolorimetrisch arbeitendem Testgeräten nach einem Verfahren gemäß ISO 5398-2 analysiert.

### Bestimmung von Chrom in Niederschlag / Feststoff

Die organischen Verbindungen in der Probe wurden bei etwa 1000 °C an Luft in einem Muffelofen verbrannt, die so erhaltene Probe in Säure gelöst und der Chromgehalt nach ISO 5398-2 wie unter "Bestimmung von gelöstem Chrom" bestimmt.

### Gerbflottenprobe

Eine Probe gebrauchte Gerbflotte wurde durch die Gerbung von Tierhäuten (Einsatzware: in Wasser gelöstes Chromosal B, ein basisches Chromsulfat der LANXESS Deutschland GmbH) hergestellt. Der Chromgehalt der verbrauchten Flotte lag bei 1,58 g/l.

### Beispiel (1)

2000 g der Gerbflotte (pH 3,9) wurde in einem 3I Becherglas mit 7,5 g Aktivkohle (Norit GL50W) unter Rühren mit dem Magnetrührer versetzt. Der pH betrug nach der Zugabe 5,2. Es wurde NaOH 50% langsam unter weiterem Rühren zugesetzt, bis der pH bei 8,5 lag. (7,3g) und anschließend durch einen Papierfilter filtriert. Die erhaltene Lösung war farblos und enthielt 4ppm Chrom. Der Filterkuchen wurde getrocknet und auf Chrom analysiert. Der Chromgehalt betrug 5,35% Cr.

### Beispiel (2)

### Auslaugen des Filterkuchens mit basischer Chromsulfat Lösung

Zu 20g des in Beispiel 1 erhaltenen, feuchten Filterkuchens wurden 28,3g Chromosal B und 31,8g Wasser gegeben und unter Rühren aufgekocht, anschließend wieder auf die Gesamtmenge von 80g mit destilliertem Wasser aufgefüllt und dann filtriert. Die erhaltene Lösung hatte einen Chromgehalt von 7,79 % (erwartet durch die Chromosal B Zugabe: 6,4%).

## Patentansprüche

1. Verfahren zum Entfernen von gelösten Cr(III)-verbindungen aus gebrauchten Gerbflotten ohne Zugabe eines von Aktivkohle verschiedenen Reduktionsmittels, umfassend die Schritte:
a) Zugabe von Aktivkohle zu mindestens einer gebrauchten Gerbflotte,
b) Erhöhung des pH der Mischung aus Schritt a) unter Durchmischung auf einen Wert von 7.0 bis 9.0 zur Ausfällung von Cr(III) unter Bildung eines Cr(III)-Niederschlag-Aktivkohle-Gemenges und
c) Abtrennung des Cr(III)-Niederschlag-Aktivkohle-Gemenges.

2. Verfahren gemäß Anspruch 1, wobei die in Schritt a) eingesetzte gebrauchte Gerbflotte einen pH im Bereich von 2 bis 5, vorzugsweise von 2 bis 4 aufweist.

3. Verfahren gemäß Anspruch 2, wobei in Schritt b) der pH auf einen Wert von 7 8,0 bis 9,0 erhöht wird.

4. Verfahren gemäß einem oder mehreren der Ansprüche 1 bis 3, wobei die Erhöhung des pH in Schritt b) mittels Natriumhydroxid oder Natronlauge, vorzugsweise Natronlauge erfolgt.

5. Verfahren gemäß einem oder mehreren der Ansprüche 1 bis 4, wobei in Schritt b) die Durchmischung mittels Umwälzung, Rühren, Pumpen und/oder Einblasen von Gasen erfolgt.

6. Verfahren gemäß einem oder mehreren der Ansprüche 1 bis 5, wobei die Abtrennung in Schritt c) durch Abfiltrieren, Zentrifugieren oder Sedimentieren, bevorzugt durch Abfiltrieren in einer Nutsche oder einer Filterpresse, Sedimentieren mittels Gravitation oder Filtrieren an Filterkerzen erfolgt.

7. Verfahren gemäß einem oder mehreren der Ansprüche 1 bis 6, wobei die in Schritt c) erhaltene Gerbflotte einen Gesamtchromgehalt von unter 5 ppm, bevorzugt von 4 ppm oder weniger aufweist

8. Verfahren gemäß einem oder mehreren der Ansprüche 1 bis 7, weiterhin umfassend einen nachfolgenden Schritt d) in dem der pH Wert des in Schritt c) abgetrennten Cr(III)-Niederschlag-Aktivkohle-Gemenges abgesenkt und der Cr(III)-Niederschlag teilweise oder vollständig in Lösung gebracht wird.

9. Verfahren gemäß Anspruch 8, wobei die Absenkung des pH durch Zugabe mindestens einer Säure, vorzugsweise einer mineralischen Säure, besonders bevorzugt Salz- und/oder Schwefelsäure, meist bevorzugt Schwefelsäure erfolgt.

10. Verfahren gemäß einem oder mehreren der Ansprüche 8 oder 9, wobei die Absenkung des pH durch Zugabe mindestens einer sauren Chrom (III)-Verbindung, bevorzugt sauren Cr(III)-Verbindungen ausgewählt aus Cr(III)-oxiden, Cr(III)-hydroxiden, Cr(III)-halogeniden, Cr(III)-sulfat und Mischungen dieser Verbindungen und besonders bevorzugt durch Zugabe von basischem Cr(III)-sulfat erfolgt.

11. Verfahren gemäß einem oder mehreren der Ansprüche 9 oder 10 wobei die Säure gemäß Anspruch 9 und/oder die saure Cr(III)-Verbindung gemäß Anspruch 10 mit Wasser zu einer sauren Lösung vermengt wird und die saure Lösung mit dem abgetrennten Cr(III)-Niederschlag-Aktivkohle-Gemenge in Kontakt gebracht wird.

12. Verfahren gemäß einem oder mehreren der Ansprüche 8 bis 10, wobei die nach Auflösung des Cr(III)-Niederschlags des abgetrennten Cr(III)-Niederschlag-Aktivkohle-Gemenges zurückbleibende Aktivkohle in Schritt a) des Verfahrens zurückgeführt wird.

## Claims

1. Method for removing dissolved Cr(III) compounds from spent tanning liquors without addition of a reducing agent other than activated carbon, comprising the steps of:
a) adding activated carbon to at least one spent tanning liquor,
b) raising the pH of the mixture from step a), with mixing, to a value of 7.0 to 9.0 to precipitate Cr(III), to form a Cr(III) precipitate/activated carbon conglomerate, and
c) separating off the Cr(III) precipitate/activated carbon conglomerate.

2. Method according to Claim 1, wherein the spent tanning liquor used in step a) has a pH in the range from 2 to 5, preferably from 2 to 4.

3. Method according to Claim 2, wherein the pH is raised in step b) to a value of 7 8.0 to 9.0.

4. Method according to one or more of Claims 1 to 3, wherein the pH is raised in step b) by means of sodium hydroxide or soda lye, preferably soda lye.

5. Method according to one or more of Claims 1 to 4, wherein the mixing in step b) takes place by means of circulation, stirring, pumping and/or blowing-in of gases.

6. Method according to one or more of Claims 1 to 5, wherein the separation in step c) takes place by filtration, centrifugation or sedimentation, preferably by filtration in a suction filter or a filter press, sedimentation by means of gravitation, or filtering in filter candles.

7. Method according to one or more of Claims 1 to 6, wherein the tanning liquor obtained in step c) has a total chromium content of below 5 ppm, preferably of 4 ppm or less.

8. Method according to one or more of Claims 1 to 7, further comprising a subsequent step d) in which the pH of the Cr(III) precipitate/activated carbon conglomerate separated off in step c) is lowered and the Cr(III) precipitate is brought partially or completely into solution.

9. Method according to Claim 8, wherein the pH is lowered by addition of at least one acid, preferably a mineral acid, more preferably hydrochloric and/or sulfuric acid, most preferably sulfuric acid.

10. Method according to one or more of Claims 8 or 9, wherein the pH is lowered by addition of at least one acidic chromium(III) compound, preferably acidic Cr(III) compounds selected from Cr(III) oxides, Cr(III) hydroxides, Cr(III) halides, Cr(III) sulfate and mixtures of these compounds and more preferably by addition of basic Cr(III) sulfate.

11. Method according to one or more of Claims 9 or 10, wherein the acid according to Claim 9 and/or the acidic Cr(III) compound according to Claim 10 are/is combined with water to give an acidic solution and the acidic solution is contacted with the Cr(III) precipitate/activated carbon conglomerate separated off.

12. Method according to one or more of Claims 8 to 10, wherein the activated carbon remaining after dissolution of the Cr(III) precipitate of the Cr(III) precipitate/activated carbon conglomerate separated off is returned to step a) of the method.

## Revendications

1. Procédé d'enlèvement de composés de Cr(III) dissous à partir de bains de tannage utilisés sans addition d'un agent de réduction autre que du charbon actif, comprenant les étapes suivantes :
a) ajouter du charbon actif à au moins un bain de tannage utilisé,
b) augmenter le pH du mélange de l'étape a) sous agitation à une valeur de 7,0 à 9,0 afin de précipiter le Cr(III) dans le but de former un mélange de précipité de Cr(III) et de charbon actif, et
c) séparer le mélange de précipité de Cr(III) et de charbon actif

2. Procédé selon la revendication 1, dans lequel le bain de tannage utilisé employé à l'étape a) présente un pH compris entre 2 et 5, de préférence entre 2 et 4.

3. Procédé selon la revendication 2, dans lequel, à l'étape b), le pH est augmenté jusqu'à une valeur comprise entre 7 8,0 et 9,0.

4. Procédé selon une ou plusieurs des revendications 1 à 3, dans lequel l'augmentation du pH à l'étape b) est réalisée en utilisant de l'hydroxyde de sodium ou de la soude, de préférence de la soude caustique.

5. Procédé selon une ou plusieurs des revendications 1 à 4, dans lequel, à l'étape b), le mélange est réalisé par circulation, agitation, pompage et/ou injection de gaz.

6. Procédé selon une ou plusieurs des revendications 1 à 5, dans lequel la séparation à l'étape c) est réalisée par filtration, centrifugation ou sédimentation, de préférence par filtration dans un entonnoir filtrant ou un filtre-presse, par sédimentation par gravitation ou par filtration sur des bougies filtrantes.

7. Procédé selon une ou plusieurs des revendications 1 à 6, dans lequel le bain de tannage obtenu à l'étape c) présente une teneur totale en chrome inférieure à 5 ppm, de préférence inférieure ou égale à 4 ppm.

8. Procédé selon une ou plusieurs des revendications 1 à 7, comprenant en outre une étape d) ultérieure dans laquelle le pH du mélange de précipité de Cr(III) et de charbon actif séparé à l'étape c) est diminué et le précipité de Cr(III) est partiellement ou totalement mis en solution.

9. Procédé selon la revendication 8, dans lequel la diminution du pH est réalisée par l'addition d'au moins un acide, de préférence un acide minéral, et mieux encore d'un sel et/ou d'acide sulfurique, idéalement d'acide sulfurique.

10. Procédé selon une ou plusieurs des revendications 8 ou 9, dans lequel la diminution du pH est réalisée par l'addition d'au moins un composé acide du chrome (III), de préférence de composés acides de Cr(III) sélectionnés parmi les oxydes de Cr(III), les hydroxydes de Cr(III), les halogénures de Cr(III), le sulfate de Cr(III) ainsi que des mélanges de ces composés, et mieux encore par l'addition de sulfate basique de Cr(III).

11. Procédé selon une ou plusieurs des revendications 9 ou 10, dans lequel l'acide selon la revendication 9 et/ou le composé acide de Cr(III) selon la revendication 10 sont mélangés avec de l'eau de manière à former une solution acide, et dans lequel la solution acide est mise en contact avec le mélange de précipité de Cr(III) et de charbon actif séparé.

12. Procédé selon une ou plusieurs des revendications 8 à 10, dans lequel le charbon actif restant après la dissolution du précipité de Cr(III) du mélange de précipité de Cr(III) et de charbon actif séparé est recyclé à l'étape a) du procédé.
